# EUROPEAN PATENT SPECIFICATION

(11) **EP 1 755 283 B1**
(45) Date of publication and mention of the grant of the patent: **15.07.2009**
(21) Application number: 06741714.7
(22) Date of filing: 25.04.2006
(51) Int. Cl.: H04L 12/28, H04M 11/00, H04L 12/24, H04M 3/00, H04M 11/06, H04L 12/56

(54) **A METHOD FOR CONFIGURING TERMINAL PARAMETER OF BROADBAND ACCESS TERMINAL**
VERFAHREN ZUM KONFIGURIEREN DES ENDGERÄT-PARAMETERS EINES BREITBAND-ZUGANGSENDGERÄTS
PROCÉDÉ DE CONFIGURATION DE PARAMÈTRE DE TERMINAL D ACCÈS HAUT DÉBIT

(30) Priority: 29.04.2005 CN 200510025600
(43) Date of publication of application: 21.02.2007
(73) Proprietor: Huawei Technologies Co., Ltd., Longgang District Shenzhen Guangdong 518129 (CN)
(72) Inventor: SHI, Shuguang, Shenzhen, Guangdong 518129 (CN); LIU, Chenglong, Shenzhen, Guangdong 518129 (CN)
(74) Representative: Viering, Jentschura & Partner
(86) International application number: PCT/CN2006/000783
(87) International publication number: WO 2006/116910

(56) References cited:
- WO-A-20/04006503
- CN-A- 1 422 044
- CN-A- 1 592 487
- US-A1- 2002 026 504
- US-A1- 2002 095 595

## Description

### Field of the Invention

The present invention relates to access technologies in the communication field, and more particularly, to a method for configuring parameters of a broadband access terminal by adopting digital subscriber loop technologies.

### Background of the Invention

Digital Subscriber Loop (xDSL) is a technology using twisted pairs to transmit high-speed data, which is developed by Bellcore in order to promote Video on Demand (VOD) service. xDSL is a general term for all kinds of Digital Subscriber Line (DSL), which uses an existing general telephone line to transmit data, voice and video signal, and the transmission rate can be up to several megabits per second.

All DSL technologies are based on existing general copper-core telephone lines, which improve the transmission rate through signal modulation. According to the difference in the signal transmission rate and distance and in the symmetry of up channel and down channel, xDSL may be classified into Asymmetric Digital Subscriber (ADSL), Rate Adaptive Digital Subscriber Line (RADSL), Very High Speed Digital Subscriber Line (VDSL), Single-line DSL (SDSL), Integrated Services Digital Network (ISDN), ISDN Digital Subscriber Line (IDSL) and High Speed Digital Subscriber Line (HDSL) etc.

Among them, the ADSL broadband technology is compatible of narrowband and broadband services and can connect ports of subscriber terminals and service access ports via existing telephone lines by using special modulating-demodulating hardware. By adopting the ADSL technology, the data transmission rate via a general telephone line can be up to 140 times of that via a general dialing modulator/demodulator (MODEM). The bandwidth of ADSL is divided into three parts, for transmitting voice, up data, and down data, respectively. The bandwidth of an up channel, which can transmit data with the highest speed of 640kbit/S, is much smaller than that of a down channel, therefore, this technology is also called asymmetric technology. By adopting the asymmetric transmission, it can ensure the crosstalk at the subscriber side is lower than that for a symmetric system, thereby improving the transmission rate and lengthening the transmission distance.

The main characteristics of ADSL lie in high-speed transmission, avoidance of interference between accessing to the internet and making a call, and quick and convenient installation. With the fast development of the Internet, as a technology which can access to the internet with a high speed, ADSL is competitive, which makes it possible to provide multimedia services over the Internet.

Up to the end of the first quarter in 2005, the number of DSL subscribers reached 150 millions, including ADSL subscribers. It is estimated that the number of DSL broadband subscribers will reach 500 millions by the end of 2010. The increase in broadband subscribers will lead directly to the increase in the stress on broadband operation and maintenance. How to solve the problems in plug-and-play of a terminal and remote on-line management is one of the most important tasks of broadband operation and maintenance.

Specifically, for the above ADSL system, plug-and-play means that an ADSL terminal can acquire configurations required by service automatically. In other words, upon being powered on, the ADSL terminal acquires from a device at service end related service configurations, by which subsequent service applications can be developed for the ADSL terminal; or in the process of service development, the service end device can remotely configure the parameters of the terminal so as to update service data. Here, the service end device includes Digital Subscriber Line Access Multiplexer (DSLAM), Broadband Remote Access Server (BRAS) and network management etc.

The following are two common methods for acquiring service parameters by an ADSL terminal.

The first method is to generate ADSL terminal configuration parameters at network management, and send the ADSL terminal configuration parameters to an ADSL terminal via DSLAM. Specifically, upon being powered on and restarted, the ADSL terminal requests the DSLAM to download the terminal configuration parameters. In response, the DSLAM forwards the request to a network management server, requesting the server to send the ADSL terminal configuration parameters. In response, the network management server sends the terminal configuration parameters to the DSLAM, which in turn sends the parameters to the ADSL terminal.

Disadvantages of the first method lie in, in order to be able to respond the request from the DSLAM at any time, the network management server must be online all the time, otherwise it is possible that the terminal can not acquire the preconfigured configuration parameters, which will lead to abnormal operation, and therefore introduce an unstable system. Besides, the more devices in the network are involved in configuring the terminal parameters, the more complicated the operation is.

The second method is to generate the terminal configuration parameters directly at the DSLAM, which maintains the configured terminal parameters locally.

Disadvantages of the second method lie in, because the parameters are configured directly at the DSLAM, command formats and maintenance interfaces for the DSLAMs from different factories are different, which will result in difficulties in maintenance, high requirements on maintenance and difficulties in centralized management. That is to say, it is difficult to maintain and implement.
[0012a] WO 2004/006503 A discloses an arrangement and a method with dynamic port configuration of network equipment for communication in a broadband network. A central managing database in connection with a Dynamic Host Configuration Protocol server is keeping templates with recordings of network equipment parameters for their physical port settings and deployed services. Hence, dynamic updating of port settings is enabled by conveying parameter recordings from the Dynamic Host Configuration Protocol server. The parameter settings are updated in the intermediate means.

### Summary of the Invention

Therefore, a main object of the invention is to provide a method for configuring parameters of a broadband access terminal, which is stable, simple in operation, convenient in maintenance and easy to implement.

In an embodiment of the invention, a method for configuring parameters of a broadband access terminal includes the following steps:

A. sending, from network management side, configuration parameters required by the broadband access terminal to a digital subscriber line access multiplexer which the broadband access terminal is connected to;

B. converting, by the digital subscriber line access multiplexer, the configuration parameters from the network management side into parameters or format matching the terminal type and storing locally the results of the conversion for downloading by the broadband access terminal;

C. downloading, by the broadband access terminal, the configuration parameters from the digital subscriber line access multiplexer through interaction with the digital subscriber line access multiplexer, and updating the configurations.

Optionally, in step B, the digital subscriber line access multiplexer stores the configuration parameters from the network management side directly.

Besides, in step C, the following substep may be included:

sending, by the broadband access terminal, an instruction to the digital subscriber line access multiplexer requesting to download the configuration parameters upon restart of the broadband access terminal, and downloading or reading initiatively the configuration parameters stored at the digital subscriber line access multiplexer after receipt of an acknowledgement.

Besides, in step C, the following substeps may be included:

sending, by the broadband access terminal, an instruction to the digital subscriber line access multiplexer requesting to download the configuration parameters upon restart of the broadband access terminal;

sending or configuring, by the digital subscriber line access multiplexer initiatively, the locally stored configuration parameters to the broadband access terminal, in response to the instruction.

Besides, in step C, the following substep may be included:

sending, by the broadband access terminal, an instruction to the digital subscriber line access multiplexer requesting to download the configuration parameter during the operation of the broadband access terminal, and downloading or reading initiatively the configuration parameters stored at the digital subscriber line access multiplexer.

Besides, in step C, the following substeps may be included:

sending, by the broadband access terminal, an instruction to the digital subscriber line access multiplexer requesting to download the configuration parameters during the operation of the broadband access terminal;

sending or configuring, by the digital subscriber line access multiplexer initiatively, the locally stored configuration parameters to the broadband access terminal, in response to the instruction.

Besides, step A further comprises searching, by the network management side, a database for the configuration parameters to be configured to the broadband access terminal, the database including four tables:

a first table for correspondences between port indexes and terminal configuration profile indexes,

a second table for terminal configuration profile information which contains correspondences between terminal configuration profile indexes and permanent virtual lines,

a third table for information on virtual channel connections which the permanent virtual lines correspond to,

a fourth table for information on asynchronous transfer mode adaptation layer profiles which the virtual channel connections correspond to.

Besides, the method further includes the following step:

downloading, by the broadband access terminal, the configuration parameters from the digital subscriber line access multiplexer and storing the downloaded parameters.

Besides, step A further includes: before sending the configuration parameters, acquiring, by the network management side, the configuration parameters from a configuration file at the network management side.

The main difference between the technical solution in the embodiment of the invention and the prior art lies in, the configuration parameters are generated at the network management side and sent to the DSLAM, and after the DSLAM stores the configuration parameters, the download of the configuration parameters is implemented through the interaction between the DSLAM and the terminal.

Besides, the terminal can request for download upon start-up or in operation, and the download can be implemented by the terminal or the DSLAM.

At the network management side, the parameters to be configured can be acquired by searching the four tables.

The difference in technical solution brings significant benefits, because the network management side only participate in the generation of configuration parameters (in an one-off way), and the downloads of the terminal configuration parameters thereafter are all implemented by the DSLAM; even if there is a trouble with the network management side, the download of the terminal configuration parameters would not be affected. So compared to the first method in the prior art, the invention improves the stability, reduces the number of the devices in the network involved in configuring the terminal parameters, and simplifies the operation. On the other hand, because the configuration parameters are generated at the network management side, compared to the second method in the prior art, the invention can use an uniform maintenance interface and an uniform command format, thus decreases the difficulties in maintenance and makes it easy to implement.

Besides, storing the configuration parameter in the four tables can largely decreases data redundancy, therefore the maintenance is made more convenient.

### Brief Description of the Drawings

Fig. 1 is a schematic diagram of an ADSL system associated with the parameter configuration method according to an embodiment of the invention;

Fig. 2 is a schematic diagram illustrating a relationship among four tables associated with the parameter configuration method according to an embodiment of the invention;

Fig. 3 is a schematic diagram illustrating another relationship among four tables associated with the parameter configuration method according to an embodiment of the invention;;

Fig. 4 is a schematic diagram illustrating a flow of the terminal parameter configuration method according to a first embodiment of the invention;

Fig. 5 is a schematic diagram illustrating a flow of the terminal parameter configuration method according to a second embodiment of the invention;

Fig. 6 is a schematic diagram illustrating a flow of the terminal parameter configuration method according to a third embodiment of the invention;

Fig. 7 is a schematic diagram illustrating a flow of the terminal parameter configuration method according to a fourth embodiment of the invention;

Fig. 8 is a schematic diagram illustrating a flow of the terminal parameter configuration method according to a fifth embodiment of the invention;

Fig. 9 is a schematic diagram illustrating a flow of the terminal parameter configuration method according to a sixth embodiment of the invention.

### Detailed Description of the Embodiments

In order to make the objects, technical solutions and advantages be understood more clearly, a further detailed description of the invention will be given below in conjunction with the accompanying drawings.

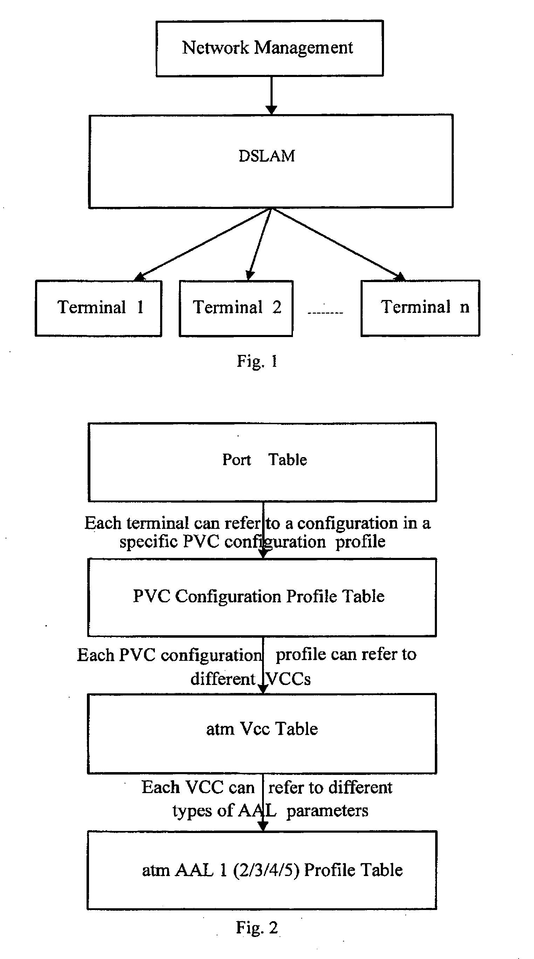

As shown in Fig. 1, an ADSL system associated with the parameter configuration method according to an embodiment of the invention includes a network management and a DSLAM connected to the network management, and a terminal is connected to the DSLAM.

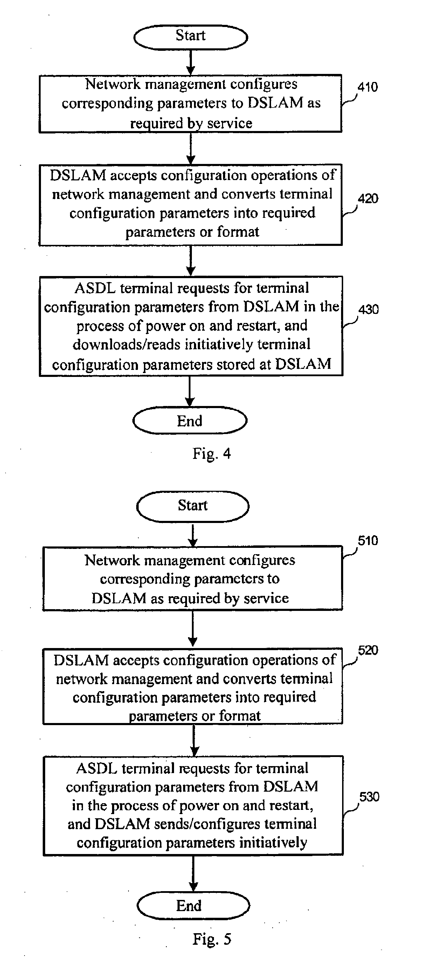

Fig. 4 shows a schematic diagram illustrating a flow of the terminal parameter configuration method according to a first embodiment of the invention. As shown, in the embodiment, the following steps are included.

Step 410: the network management configures corresponding parameters to the DSLAM, as required by service.

In this step, four tables maintained at the network management (referring to Fig. 1) are used for implementing parameter configuration:

a Port Table, for indicating correspondences between port indexes and terminal configuration profile indexes;

a PVC (Permanent Virtual Circuit) Configuration Profile Table, which contains correspondences between terminal configuration profile indexes and permanent virtual lines;

an atm (asynchronous transfer mode) Vcc (Virtual channel connection) table, which contains information on virtual channel connections which the permanent virtual lines correspond to; and

an atm AAL 1 (2/3/4/5) Profile Table, which contains information on asynchronous transfer mode adaptation layer profiles which the virtual channel connections correspond to.

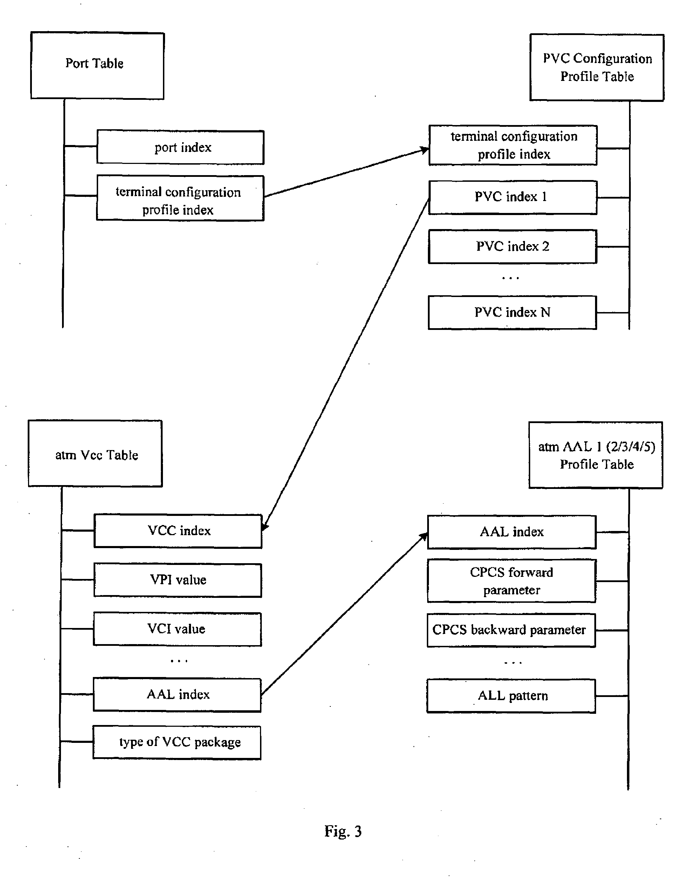

It should be noted that, there is a certain relationship among the above four tables. As shown in Fig. 2 and Fig. 3, for a Port Table, each terminal therein can refer to a configuration in a specific PVC configuration profile; a PVC profile can refer to different Vcc's; and a Vcc can refer to different types of AAL parameters.

As shown in Fig.2 and Fig.3, the process of configuring terminal parameters is: first, according to a port index, finding a corresponding terminal configuration profile index in the Port Table; then, according to the terminal configuration profile index, finding the index of each PVC which the port corresponds to in the PVC Configuration Profile Table; then, according to each PVC index, finding a Vcc which the PVC corresponds to in the atm Vcc Table; and finally, according to an AAL index of the atm Vcc Table, finding an AAL configuration profile which the Vcc corresponds to in the atm AAL1 (2/3/4/5) Profile Table, the AAL configuration profile containing information such as Common Part Convergence Sublayer (CPCS) forward parameter, CPCS backward parameter, AAL pattern, etc. The network management thus finds the configuration parameters which the ADSL terminal corresponds to from the above four tables.

As can be seen, in this step, the four tables are used in the parameter configuration process, and the terminal parameter configuration management is implemented through profiles. In other words, like configuration contents may be combined into a profile, which can be referred to by another configuration. Besides, configuration management through two levels of profiles is implemented in this step, the tow levels of profiles being terminal PVC configuration profile and AAL configuration profile. With such two levels of profiles for parameter configuration table, a terminal (port) may refer to any of the configuration profiles, and a terminal configuration profile may refer to ATM flow profile parameters as appropriate. In this case, the configuration data can be stored in a relative efficient way in this step, thus data redundancy can be decreased to a greatest extent.

Step 420: the DSLAM accepts the configuration operations of the network management, and converts the terminal configuration parameters into required parameters or format, i.e., those matching an ADSL terminal signal. Specifically, the configuration parameters from the network management can be in a uniform format independent of the terminal type, and after having been sent to the DSLAM, are converted correspondingly to the actual type of the terminal. Such conversion may be decomposing one parameter into a plurality of parameters, composing a plurality of parameters into one parameter, or conversion in format, such as converting a character string type into an integer type which the terminal requires. Such conversion at the DSLAM can decrease the complexity at the network management side. In other embodiments of the invention, the terminal configuration parameters may also be stored directly in the DSLAM device.

Step 430: the ADSL terminal downloads and updates the configuration parameters by interacting with the DSLAM. Specifically, in this embodiment, in the process of power on and restart of the ADSL terminal, the ADSL terminal sends a request to the DSLAM, and downloads/reads initiatively the terminal configuration parameters stored at the DSLAM after receiving an acknowledgement. It should be noted that, in this invention, other methods may be used to implement downloading and updating of the configuration parameters of the ADSL terminal, which will be described in detail in the following embodiments.

It is easy to understand that, in this embodiment, because the network management configures and sends the ADSL terminal configuration parameters to the DSLAM, it is unnecessary to ensure the network management being online all the time as in the first solution in the prior art; on the other hand, compared with the second solution in the prior art, the terminal parameters are not configured directly at the DSLAM, therefore it will not result in difficult maintenance and implementation due to command formats with different length as well as different maintenance interfaces.

Fig. 5 shows a schematic diagram illustrating a flow of the terminal parameter configuration method according to a second embodiment of the invention. As shown, the embodiment includes the following steps.

Step 510: the network management configures corresponding parameters to the DSLAM as required by service. In this step, the process of configuring the terminal parameters is the same as that of the first embodiment, and the detailed description thereof will be omitted here. In this step, in the same way, the four tables are used in the parameter configuration process, and the terminal parameter configuration management is implemented through profiles. In other words, like configuration contents may be combined into a profile, which can be referred to by another configuration. Besides, configuration management through two levels of profiles is implemented in this step, the two levels of profiles being terminal PVC configuration profile and AAL configuration profile. With such two levels of profiles for parameter configuration table, a terminal (port) may refer to any of the configuration profiles, and a terminal configuration profile may refer to ATM flow profile parameters as appropriate. As described above, the configuration data can be stored in a relative efficient way in this step, thus data redundancy can be decreased to a greatest extent. Reference may be made directly to Fig. 2 and Fig. 3 and the relevant description with respect to the first embodiment for the relationship among the four tables and the specific configuration process.

Step 520: the DSLAM accepts the configuration operations of the network management, and converts the terminal configuration parameters into required parameters or format, i.e., those matching an ADSL terminal signal.

Step 530: the ADSL terminal downloads and updates the configuration parameters by interacting with the DSLAM. In this embodiment, what differs from the first embodiment lies in the following substep: in the process of power on and restart of the ADSL terminal, the ADSL terminal sends a request instruction to the DSLAM, and the DSLAM sends/configures the terminal configuration parameters initiatively.

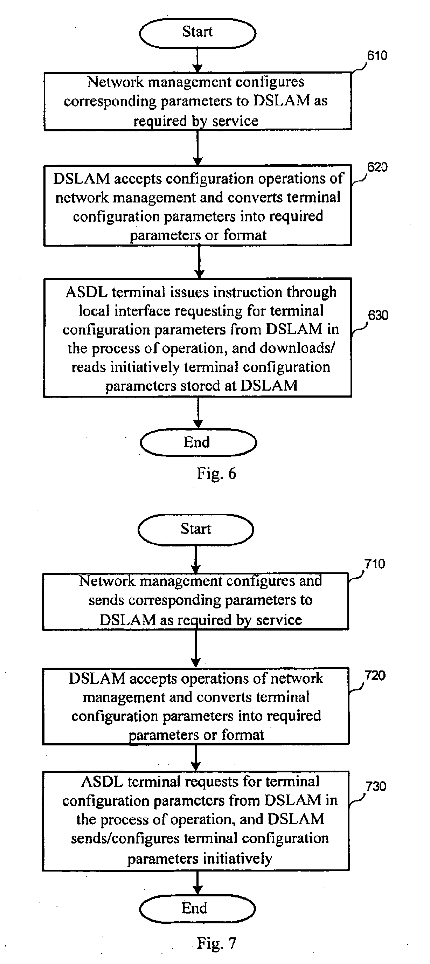

Fig. 6 shows a schematic diagram illustrating a flow of the terminal parameter configuration method flow according to a third embodiment of the invention. As shown, the embodiment includes the following steps.

Step 610: the network management configures corresponding parameters to the DSLAM as required by service. In this step, the process of configuring the terminal parameters is the same as that of the first embodiment, and the detailed description thereof will be omitted here. Reference may be made directly to Fig. 2 and Fig. 3 and the relevant description with respect to the first embodiment for the relationship among the four tables and the specific configuration process.

Step 620: the DSLAM accepts the configuration operations of the network management, and converts the terminal configuration parameters into required parameters or format, i.e., those matching an ADSL terminal signal.

Step 630: the ADSL terminal downloads and updates the configuration parameters by interacting with the DSLAM. In this embodiment, what differs from the first and second embodiments lies in the following substep: in the operation process, the ADSL terminal sends an instruction via a local interface, that is, the subscriber presses a button on the terminal to request configuration parameters from the DSLAM, and after receiving an acknowledgement, the ADSL terminal downloads/reads initiatively the terminal configuration parameters stored at the DSLAM.

Fig. 7 shows a schematic diagram illustrating a flow of the terminal parameter configuration method according to a fourth embodiment of the invention. As shown, the embodiment includes the following steps.

Step 710: the network management configures corresponding parameters to the DSLAM as required by service. In this step, the process of configuring the terminal parameters is the same as that of the first embodiment, and the detailed description thereof will be omitted here. Reference may be made directly to Fig. 2 and Fig. 3 and the relevant description with respect to the first embodiment for the relationship among the four tables and the specific configuration process.

Step 720: the DSLAM accepts the configuration operations of the network management, and converts the terminal configuration parameters into required parameters or format, i.e., those matching an ADSL terminal signal.

Step 730: the ADSL terminal downloads and updates the configuration parameters by interacting with the DSLAM. In this embodiment, what differs from the first, second and third embodiments lies in the following substep: in the operation process, the ADSL terminal requests the configuration parameters from the DSLAM, and the DSLAM sends/configures the terminal configuration parameters initiatively.

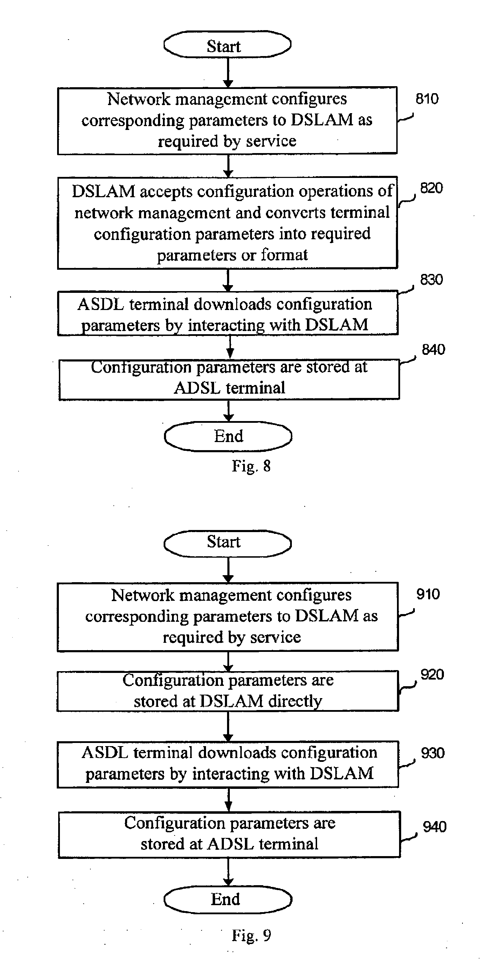

Fig. 8 shows a schematic diagram illustrating a flow of the terminal parameter configuration method according to a fifth embodiment of the invention. As shown, the embodiment includes the following steps.

Step 810: the network management configures corresponding parameters to the DSLAM as required by service. In this step, the process of configuring the terminal parameters is the same as that of the first embodiment, and the detailed description thereof will be omitted here. Reference may be made directly to Fig. 2 and Fig. 3 and the relevant description with respect to the first embodiment for the relationship among the four tables and the specific configuration process.

Step 820: the DSLAM accepts the configuration operations of the network management, and converts the terminal configuration parameters into required parameters or format, i.e., those matching an ADSL terminal signal.

Step 830: the ADSL terminal downloads and updates the configuration parameters by interacting with the DSLAM. This step may be carried out through the corresponding substep in any one of the first to the fourth embodiments.

Step 840: the downloaded or updated configuration parameters are stored at the ADSL terminal. In this invention, this step is optional; it is the terminal that decides whether the terminal configuration should be stored, according to the requirement of the service.

Fig. 9 shows a schematic diagram illustrating a flow of the terminal parameter configuration method according to a sixth embodiment of the invention. As shown, the embodiment includes the following steps.

Step 910: the network management configures corresponding parameters to the DSLAM as required by service. In this step, the process of configuring the terminal parameters is the same as that of the first embodiment, and the detailed description thereof will be omitted here. Reference may be made directly to Fig. 2 and Fig. 3 and the relevant description with respect to the first embodiment for the relationship among the four tables and the specific configuration process.

Step 920: what differs from the previous embodiments is that the terminal configuration parameters are stored directly in the DSLAM device.

Step 930: the ADSL terminal downloads and updates the configuration parameters by interacting with the DSLAM. This step may be carried out through the corresponding substep in any one of the first to the fourth embodiments.

Step 940: the downloaded or updated configuration parameters are stored at the ADSL terminal.

In addition to the above embodiments, in another embodiment of the invention, the ADSL terminal parameters may be configured in such a way that the configuration parameters are not acquired by searching the four tables but from a configuration file at the network management side. The configuration file includes configuration parameters of all kinds of terminals.

As can be seen from the above detailed description of the embodiments of the invention, because the network management configures the ADSL terminal configuration parameters to the DSLAM, it is avoided that each time powered on and restarted, the terminal needs to request to download the terminal configuration parameters through the DSLAM; therefore, there is no need for the network management server to be online all the time, making the system more stable and the operations more convenient. Besides, it solves the problem in maintenance and implementation due to the different command formats and maintenance interfaces of the DSLAMs in the case that the terminal configuration parameters are generated directly at a DSLAM; therefore, the difficulties in maintenance and implementation can be decreased.

Although the invention has been illustrated and described with reference to certain preferred embodiments, it will be apparent to those skilled in the art that various changes and equivalent substitutions can be made. Such changes and equivalent substitutions shall be covered by the present invention, provided that they fall within the scope of the present invention as defined by the appended claims.

## Claims

1. A method for configuring parameters of a broadband access terminal, comprising:
A. sending (410), from network management side, configuration parameters required by the broadband access terminal to a digital subscriber line access multiplexer which the broadband access terminal is connected to;
B. converting (420), by the digital subscriber line access multiplexer, the configuration parameters from the network management side into parameters or format matching the terminal type and storing locally the results of the conversion for downloading by the broadband access terminal; and
C. downloading (430), by the broadband access terminal, the configuration parameters from the digital subscriber line access multiplexer through interaction with the digital subscriber line access multiplexer, and updating the configurations.

2. The method for configuring parameters of a broadband access terminal according to Claim 1, wherein step B comprises: storing, by the digital subscriber line access multiplexer, the configuration parameters from the network management side directly.

3. The method for configuring parameters of a broadband access terminal according to Claim 1, wherein step C comprises:
sending, by the broadband access terminal, an instruction to the digital subscriber line access multiplexer requesting to download the configuration parameters upon restart of the broadband access terminal, and downloading or reading initiatively the configuration parameters stored at the digital subscriber line access multiplexer after receipt of an acknowledgement.

4. The method for configuring parameters of a broadband access terminal according to Claim 1, wherein step C comprises:
sending (530), by the broadband access terminal, an instruction to the digital subscriber line access multiplexer requesting to download the configuration parameters upon restart of the broadband access terminal; and
sending or configuring, by the digital subscriber line access multiplexer initiatively, the locally stored configuration parameters to the broadband access terminal, in response to the instruction.

5. The method for configuring parameters of a broadband access terminal according to Claim 1, wherein step C comprises:
sending, by the broadband access terminal, an instruction to the digital subscriber line access multiplexer requesting to download the configuration parameter during the operation of the broadband access terminal, and downloading or reading initiatively the configuration parameters stored at the digital subscriber line access multiplexer.

6. The method for configuring parameters of a broadband access terminal according to Claim 1, wherein step C comprises:
sending, by the broadband access terminal, an instruction to the digital subscriber line access multiplexer requesting to download the configuration parameters during the operation of the broadband access terminal; and
sending or configuring, by the digital subscriber line access multiplexer initiatively, the locally stored configuration parameters to the broadband access terminal, in response to the instruction.

7. The method for configuring parameters of a broadband access terminal according to any one of Claims 1 to 6, wherein step A further comprises searching (410), by the network management side, a database for the configuration parameters to be configured to the broadband access terminal, the database comprising four tables:
a first table for correspondences between port indexes and terminal configuration profile indexes,
a second table for terminal configuration profile information which contains correspondences between terminal configuration profile indexes and permanent virtual lines,
a third table for information on virtual channel connections which the permanent virtual lines correspond to, and
a fourth table for information on asynchronous transfer mode adaptation layer profiles which the virtual channel connections correspond to.

8. The method for configuring parameters of a broadband access terminal according to any one of Claims 1 to 6, further comprising:
downloading (830), by the broadband access terminal, the configuration parameters from the digital subscriber line access multiplexer and storing (840) the downloaded parameters.

9. The method for configuring parameters of a broadband access terminal according to any one of Claims 1 to 6, wherein step A further comprises: before sending the configuration parameters, acquiring, by the network management side, the configuration parameters from a configuration file at the network management side.

## Patentansprüche

1. Verfahren zum Konfigurieren von Parametern eines Breitband-Zugang-Endgeräts, aufweisend:
A. Senden (410), von Netzwerk-Verwaltungs-Seite, von Konfigurations-Parametern, benötigt von dem Breitband-Zugang-Endgerät, zu einem Digitaler-Teilnehmer-Anschluss-Zugang-Multiplexer, mit welchem das Breitband-Zugang-Endgerät verbunden ist;
B. Konvertieren (420), von dem Digitaler-Teilnehmer-Anschluss-Zugang-Multiplexer, der Konfigurations-Parameter von der Netzwerk-Verwaltungs-Seite in Parameter oder Format treffend den Endgerät-Typ und lokal Speichern der Ergebnisse der Konvertierung für Herunterladen von dem Breitband-Zugang-Endgerät; und
C. Herunterladen (430), von dem Breitband-Zugang-Endgerät, der Konfigurations-Parameter von dem Digitaler-Teilnehmer-Anschluss-Zugang-Multiplexer durch Interaktion mit dem Digitaler-Teilnehmer-Anschluss-Zugang-Multiplexer, und Aktualisieren der Konfigurationen.

2. Verfahren zum Konfigurieren von Parametern eines Breitband-Zugang-Endgeräts gemäß Anspruch 1, wobei Schritt B aufweist: Speichern, von dem Digitaler-Teilnehmer-Anschluss-Zugang-Multiplexer, der Konfigurations-Parameter von der Netzwerk-Verwaltungs-Seite direkt.

3. Verfahren zum Konfigurieren von Parametern eines Breitband-Zugang-Endgeräts gemäß Anspruch 1, wobei Schritt C aufweist: Senden, von dem Breitband-Zugang-Endgerät, einer Instruktion an den Digitaler-Teilnehmer-Anschluss-Zugang-Multiplexer anfragend das Herunterladen der Konfigurations-Parameter auf Neustart des Breitband-Zugang-Endgeräts hin, und einleitendes Lesen oder Herunterladen der bei dem Digitaler-Teilnehmer-Anschluss-Zugang-Multiplexer gespeicherten Konfigurations-Parameter nach Empfang einer Rückmeldung.

4. Verfahren zum Konfigurieren von Parametern eines Breitband-Zugang-Endgeräts gemäß Anspruch 1, wobei Schritt C aufweist:
Senden (530), von dem Breitband-Zugang-Endgerät, einer Instruktion an den Digitaler-Teilnehmer-Anschluss-Zugang-Multiplexer anfragend das Herunterladen der Konfigurations-Parameter auf Neustart des Breitband-Zugang-Endgeräts hin; und
Senden oder Konfigurieren, von dem Digitaler-Teilnehmer-Anschluss-Zugang-Multiplexer einleitend, der lokal gespeicherten Konfigurations-Parameter an das Breitband-Zugang-Endgerät, in Antwort auf die Instruktion.

5. Verfahren zum Konfigurieren von Parametern eines Breitband-Zugang-Endgeräts gemäß Anspruch 1, wobei Schritt C aufweist:
Senden, von dem Breitband-Zugang-Endgerät, einer Instruktion an den Digitaler-Teilnehmer-Anschluss-Zugang-Multiplexer anfragend das Herunterladen der Konfigurations-Parameter während des Betriebs des Breitband-Zugang-Endgeräts, und einleitendes Lesen oder Herunterladen der bei dem Digitaler-Teilnehmer-Anschluss-Zugang-Multiplexer gespeicherten Konfigurations-Parameter.

6. Verfahren zum Konfigurieren von Parametern eines Breitband-Zugang-Endgeräts gemäß Anspruch 1, wobei Schritt C aufweist:
Senden, von dem Breitband-Zugang-Endgerät, einer Instruktion an den Digitaler-Teilnehmer-Anschluss-Zugang-Multiplexer anfragend das Herunterladen der Konfigurations-Parameter während des Betriebs des Breitband-Zugang-Endgeräts; und
Senden oder Konfigurieren, von dem Digitaler-Teilnehmer-Anschluss-Zugang-Multiplexer einleitend, der lokal gespeicherten Konfigurations-Parameter an das Breitband-Zugang-Endgerät, in Antwort auf die Instruktion.

7. Verfahren zum Konfigurieren von Parametern eines Breitband-Zugang-Endgeräts gemäß einem der Ansprüche 1 bis 6, wobei Schritt A ferner aufweist Suchen (410), von der Netzwerk-Verwaltungs-Seite, in einer Datenbank nach den Konfigurations-Parametern, mit denen das Breitband-Zugang-Endgerät konfiguriert werden soll, wobei die Datenbank vier Tabellen aufweist:
eine erste Tabelle für Korrespondenzen zwischen Port-Indizes und Endgerät-Konfiguration-Profil-Indizes,
eine zweite Tabelle für Endgerät-Konfiguration-Profil-Information welche Korrespondenzen zwischen Endgerät-Konfiguration-Profil-Indizes und Permanent-Virtuell-Leitungen enthält,
eine dritte Tabelle für Information über Virtuell-Kanal-Verbindungen, mit welchen die Permanent-Virtuell-Leitungen korrespondieren, und
eine vierte Tabelle für Information über Asynchron-Übertragungs-Modus-Anpassungs-Schicht-Profile, mit welchen die Virtuell-Kanal-Verbindungen korrespondieren.

8. Verfahren zum Konfigurieren von Parametern eines Breitband-Zugang-Endgeräts gemäß einem der Ansprüche 1 bis 6, ferner aufweisend:
Herunterladen (830), von dem Breitband-Zugang-Endgerät, der Konfigurations-Parameter von dem Digitaler-Teilnehmer-Anschluss-Zugang-Multiplexer und Speichern (840) der heruntergeladenen Parameter.

9. Verfahren zum Konfigurieren von Parametern eines Breitband-Zugang-Endgeräts gemäß einem der Ansprüche 1 bis 6, wobei Schritt A ferner aufweist: vor Senden der Konfigurations-Parameter, akquirieren, von der Netzwerk-Verwaltungs-Seite, der Konfigurations-Parameter von einer Konfigurations-Datei bei der Netzwerk-Verwaltungs-Seite.

## Revendications

1. Procédé pour configurer des paramètres d'un terminal d'accès à large bande, comprenant :
A. l'envoi (410), depuis le côté gestion de réseau, de paramètres de configuration requis par le terminal d'accès à large bande vers un multiplexeur d'accès de ligne d'abonné numérique auquel le terminal d'accès à large bande est connecté ;
B. la conversion (420), par le multiplexeur d'accès de ligne d'abonné numérique, des paramètres de configuration depuis le côté de gestion de réseau en des paramètres ou un format correspondant au type de terminal, et le stockage localement des résultats de la conversion pour un téléchargement par le terminal d'accès à large bande ; et
C. le téléchargement (430), par le terminal d'accès à large bande, des paramètres de configuration depuis le multiplexeur d'accès de ligne d'abonné numérique à travers une interaction avec le multiplexeur d'accès de ligne d'abonné numérique, et la mise à jour des configurations.

2. Procédé pour configurer des paramètres d'un terminal d'accès à large bande selon la revendication 1, dans lequel l'étape B comprend : le stockage, par le multiplexeur d'accès de ligne d'abonné numérique, des paramètres de configuration depuis le côté de gestion de réseau directement.

3. Procédé pour configurer des paramètres d'un terminal d'accès à large bande selon la revendication 1, dans lequel l'étape C comprend :
l'envoi, par le terminal d'accès à large bande, d'une instruction au multiplexeur d'accès de ligne d'abonné numérique demandant à télécharger les paramètres de configuration lors d'un redémarrage du terminal d'accès à large bande, et le téléchargement ou la lecture de manière préliminaire des paramètres de configuration stockés au niveau du multiplexeur d'accès de ligne d'abonné numérique après réception d'un accusé de réception.

4. Procédé pour configurer des paramètres d'un terminal d'accès à large bande selon la revendication 1, dans lequel l'étape C comprend :
l'envoi (530), par le terminal d'accès à large bande, d'une instruction au multiplexeur d'accès de ligne d'abonné numérique demandant à télécharger les paramètres de configuration lors d'un redémarrage du terminal d'accès à large bande ; et
l'envoi ou la configuration, par le multiplexeur d'accès de ligne d'abonné numérique de manière préliminaire, des paramètres de configuration stockés localement vers le terminal d'accès à large bande, en réponse à l'instruction.

5. Procédé pour configurer des paramètres d'un terminal d'accès à large bande selon la revendication 1, dans lequel l'étape C comprend :
l'envoi, par le terminal d'accès à large bande, d'une instruction au multiplexeur d'accès de ligne d'abonné numérique demandant à télécharger les paramètres de configuration pendant le fonctionnement du terminal d'accès à large bande, et le téléchargement ou la lecture de manière préliminaire des paramètres de configuration stockés au niveau du multiplexeur d'accès de ligne d'abonné numérique.

6. Procédé pour configurer des paramètres d'un terminal d'accès à large bande selon la revendication 1, dans lequel l'étape C comprend :
l'envoi, par le terminal d'accès à large bande, d'une instruction au multiplexeur d'accès de ligne d'abonné numérique demandant à télécharger les paramètres de configuration pendant le fonctionnement du terminal d'accès à large bande ; et
l'envoi ou la configuration, par le multiplexeur d'accès de ligne d'abonné numérique de manière préliminaire, des paramètres de configuration stockés localement au terminal d'accès à large bande, en réponse à l'instruction.

7. Procédé pour configurer des paramètres d'un terminal d'accès à large bande selon l'une quelconque des revendications 1 à 6, dans lequel l'étape A comprend en outre l'étape consistant à parcourir (410), par le côté de gestion de réseau, une base de données des paramètres de configuration devant être configurés sur le terminal d'accès à large bande, la base de données comprenant quatre tables :
une première table pour des correspondances entre des index de port et des index de profil de configuration de terminal,
une deuxième table pour des informations de profil de configuration de terminal, contenant des correspondances entre des index de profil de configuration de terminal et des lignes virtuelles permanentes,
une troisième table pour des informations sur des connexions de canal virtuelles auxquelles les lignes virtuelles permanentes correspondent, et
une quatrième table pour des informations sur des profils de couche d'adaptation en mode transfert asynchrone, auxquels les connexions de canal virtuelles correspondent.

8. Procédé pour configurer des paramètres d'un terminal d'accès à large bande selon l'une quelconque des revendications 1 à 6, comprenant en outre :
le téléchargement (830), par le terminal d'accès à large bande, des paramètres de configuration à partir du multiplexeur d'accès de ligne d'abonné numérique, et le stockage (840) des paramètres téléchargés.

9. Procédé pour configurer des paramètres d'un terminal d'accès à large bande selon l'une quelconque des revendications 1 à 6, dans lequel l'étape A comprend en outre : avant l'envoi des paramètres de configuration, l'acquisition, par le côté de gestion de réseau, des paramètres de configuration à partir d'un fichier de configuration au niveau du côté de gestion de réseau.
